# EUROPEAN PATENT SPECIFICATION

(11) **EP 1 451 478 B1**
(45) Date of publication and mention of the grant of the patent: **10.08.2005**
(21) Application number: 02791390.4
(22) Date of filing: 06.12.2002
(51) Int. Cl.: F16C 1/12, F16H 25/20

(54) **APPARATUS AND METHOD FOR TRAVEL MULTIPLYING ACTUATOR**
VORRICHTUNG UND VERFAHREN FÜR EINEN WEGVERSTÄRKENDEN AKTUATOR
APPAREIL ET PROCEDE D'ACTIONNEUR MULTIPLIANT LA COURSE

(30) Priority: 07.12.2001 US 8896; 07.12.2001 US 8351
(43) Date of publication of application: 01.09.2004
(73) Proprietor: L & P Property Management Company, South Gate, CA 90280 (US)
(72) Inventor: MCMILLEN, Robert, Tecumseh, Ontario N8N 2N4 (CA)
(74) Representative: Banzer, Hans-Jörg, Dipl.-Ing.
(86) International application number: PCT/US2002/039076
(87) International publication number: WO 2003/050426

(56) References cited:
- WO-A-96/02166
- WO-A-02/097288
- US-A- 5 638 722
- US-A- 6 053 064

## Description

### BACKGROUND OF THE INVENTION

### Field of the Invention

This invention relates generally to tension cable actuators for ergonomic devices such as lumbar supports.

### Related Art

Ergonomic supports for seats, especially lumbar supports for automobile seats, are frequently moved into supporting positions from flat positions by means of tension cables, such as Bowden cables. Bowden cables are simple, coaxial mechanical devices wherein a wire slides axially through a sleeve or conduit. Manufactures of moveable devices that support the weight of a seat passenger, especially devices designed to operate in dynamic tension, find that Bowden cables are an efficient way to apply traction to the moving parts of the ergonomic device. A Bowden cable sleeve end is anchored to one part of the ergonomic device, and the Bowden cable wire end to another part of the moving device. The two elements can be anchored to different portions of a single moving part, as in the case of an arching pressure surface that slides along guide rails. Alternatively, either the sleeve end or the wire end can be anchored to a non-moving portion, such as the housing of a push paddle type support, while the other element is anchored to the moving part of the device, such as the extending push paddle itself. Thus anchored, drawing the Bowden cable wire through the Bowden cable sleeve causes the moving parts of an ergonomic support device to travel from a relaxed, non-supporting or flat position to a tensioned, supporting position such as a bowed arch or an extended paddle.

Traction is applied to draw the wire of a Bowden cable through the sleeve of a Bowden cable by a variety of means which act on the end of the Bowden cable opposite the ergonomic device. For more expensive models of lumbar support, an electric motor is used. For devices to be installed in more economical seats, mechanical actuators are used. Typical prior art mechanical actuators anchored the Bowden cable sleeve to a stationary housing and anchored the Bowden cable wire to a moving travelling member, usually a screw, threaded into a drive nut in the housing. A lever or hand wheel turned the nut. Turning the nut so that the screw extended out of the housing had the effect of drawing the Bowden cable wire axially out of the Bowden cable sleeve at the actuator end. This action was translated to the other end of the Bowden cable in order to put tension on the moving parts of the ergonomic device and bring it into a tensioned, supporting position.

A typical lumbar support for a typical automobile seat travels from flat to an arched or extended position that is displaced as much as 50mm from the flat position. Prior art manual screw type actuators required a passenger to make anywhere from four to seven complete turns of the screw nut in order to take the lumbar support through its entire range of travel.

Highly competitive markets for automotive seats and furniture place a premium on optimization of comfort and convenience for seat occupants. There is need in the industry for a manual actuator that extends an ergonomic support device through its range of travel with fewer turns of the actuator nut by the passenger. There is also a continuing need in the industry for reducing the complication of assemblies, reducing packaging size, reducing cost, and increasing durability.

### Summary of the Invention

The present invention is a manual, screw type tension cable actuator that moves the connected ergonomic device through its full range of travel using half as many turns as required by prior art actuators. WO-A-96/02166 shows an actuator having the features of the preamble of claim 1. By requiring fewer turns, the device is more convenient for the seat passenger.

The task of the actuator is achieved by sliding the end of the Bowden cable wire axially out of the end of the Bowden cable sleeve. The present invention multiplies the travel of the wire out of the sleeve, relative to the motion of the actuator. The present invention moves the wire end and the sleeve end apart from one another to apply the tension necessary to actuate the ergonomic device at other end of the Bowden cable. Prior art mechanical screw type actuators held the Bowden cable sleeve end stationary while drawing the Bowden cable wire end axially out of the sleeve. The present invention increases Bowden cable travel relative to drive nut turns by moving the wire end and sleeve end apart simultaneously.

One embodiment of the present invention applies force in two directions: drawing the Bowden cable wire outward, and pushing the Bowden cable sleeve inward simultaneously. This embodiment of the present invention has two lead screws threaded in opposite directions. A first lead screw comprises the travelling member familiar from the prior art. The novel second lead screw comprises a travel multiplier.

Both lead screws are held within a coaxial drive nut which has on its inside diameter two sets of threads running in opposite directions. Turning the nut in a first direction extends both lead screws outward from the nut and apart from one another. Turning the nut in the opposite direction moves both lead screws inward and toward each other. The nut is turned by a lever or hand wheel. The entire device is encapsulated in a housing.

The first lead screw has the Bowden cable wire end anchored to it. The second lead screw has the Bowden cable sleeve end anchored to it. Since the nut drives both lead screws apart simultaneously, the nut also drives the Bowden cable elements anchored to the screws apart simultaneously. A single turn of the nut therefore achieves twice the separation travel between the wire end and the sleeve end as was achieved by the prior art, single screw manual actuator.

An alternative embodiment of the present invention decreases the size of the actuator package and profile by telescoping one of the lead screws into an inside channel of the other lead screw. This conserves space both within and without the seat by keeping the manual actuator compact.

In both embodiments, each lead screw has an anchor for an element of the tensioning cable. In the case of the Bowden cable, a first lead screw will have an anchor having a wide concavity for receiving a wire end boss, and a narrower neck for sliding insertion of the wire itself during assembly. The other lead screw will have a collar and slot for insertion and seating of the Bowden cable sleeve end. Preferably, the second lead screw also has a slot having both a narrow and a wide aspect, for insertion of the Bowden cable wire end and its anchor boss. The second lead screw is hollow cylindrically along its axis so that the Bowden cable wire end can be drawn axially through it and then anchored to the other lead screw. Alternatively, the first lead screw may have an extension to be inserted through the axis of the second lead screw far enough to receive anchoring of the Bowden cable wire end. Accordingly, turning the nut and separating the two lead screws also effectively separates the Bowden cable wire end from the Bowden cable sleeve end, creating the desired traction at the other end of the Bowden cable.

Another embodiment of the present invention draws the Bowden cable wire across a pulley that is attached to a lead screw. The pulley causes a length of wire to be drawn out of the Bowden cable sleeve that is twice the distance that the screw and pulley are translated when the nut is turned.

In this embodiment of the present invention a housing holds a rotating nut, and allows it to be mounted on a seat frame. Threads inside the nut engage corresponding threads on the outside of a lead screw. At the inner end of the lead screw, preferably within the housing, is a cradle for a pulley. The cradle and the pulley it holds move axially through the housing as the screw is turned by the nut. A Bowden cable is anchored to the housing at the pulley end. The Bowden cable sleeve is anchored in a seat at the end of the housing. The wire extending out of the Bowden cable is threaded through the housing, around the pulley, and back in the direction of the sleeve seat, where a second seat in the housing anchors the end of the Bowden cable wire. A passenger turns the nut which translates the lead screw outward from the housing, moving the pulley outward with it. The pulley pulls the Bowden cable wire out from the Bowden cable sleeve. The wire must be pulled out of the sleeve twice as far as the lead screw travels. Thus, a single turn of the nut achieves twice the separation travel between the wire end and the sleeve end as was achieved by the prior art, simple screw manual actuator. Accordingly, the ergonomic device may be run through its range of travel with half as many turns of the nut by a passenger.

Further embodiments of the travel multiplying concept of the present invention combine the embodiments already described. A pulley may be mounted on one of two telescoping lead screws, or two pulleys may be mounted on two lead screws, or on telescoping lead screws.

Further features and advantages of the present invention, as well as the structure and operation of various embodiments of the present invention, are described in detail below, with reference to the accompanying drawings.

### Brief Description of the Drawings

Figure 1 is a cut away side view of the actuator in a closed, untensioned position.
Figure 2 is a cut away side view of the actuator in an expanded, tensioned position.
Figure 3 is a perspective view of the assembled actuator.
Figure 4 is a cut away perspective view of the actuator.
Figure 5 is an exploded view of the actuator.
Figure 6 is a perspective view of the telescoping embodiment of the actuator, in an untensioned position.
Figure 7 is a cut away perspective view of the telescoping embodiment of the actuator in an untensioned position.
Figure 8 is a cut away perspective view of the telescoping actuator in an expanded, tensioned position.
Figure 9 is an exploded view of the telescoping actuator.
Figure 10 is a cut away perspective view of the pulley actuator in an expanded, tensioned position.
Figure 11 is a perspective view of the assembled pulley actuator.
Figure 12 is another cut away side view of the pulley actuator in a closed, untensioned position.
Figure 13 is another cut away perspective view of the pulley actuator in an expanded, tensioned position.
Figure 14 is another cut away perspective view of the pulley actuator in a closed, untensioned position.
Figure 15 is a cutaway side view of an embodiment combining telescoping lead screws and a pulley, in a relaxed position.
Figure 16 is a cutaway side view of an embodiment combining telescoping lead screws and a pulley, in a tensioned position.
Figure 17 is a cutaway side view of a two pulley embodiment in a contracted, relaxed position.
Figure 18 is a cutaway side view of a two pulley embodiment in an extended, tensioned position.
Figure 19 is a front view of one pulley for the two pulley embodiment.

### The Telescoping Embodiments

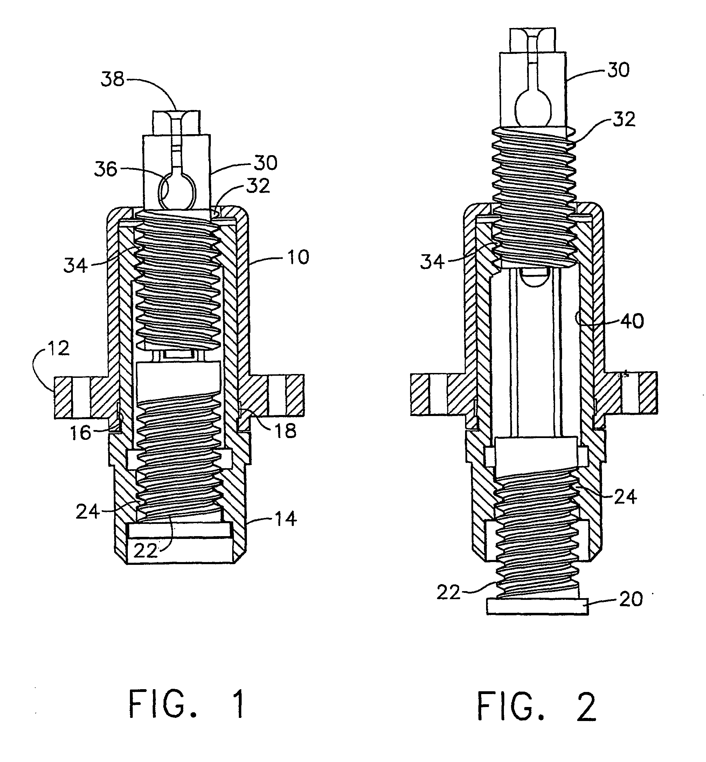

Referring to the accompanying figures wherein like reference numbers indicate like elements, figure 1 is a cut away side view of the actuator of the present invention. Housing 10 has two flanges, 12 with holes for anchoring screws so that the unit may be mounted in a seat frame. Nut 14 rotates within housing 10. Ring 16 on housing 14 seats within anular detent 18 in housing 10, retaining nut 14 in housing 10. Outside lead screw 20 has threads 22 which engage with corresponding threads 24 on the inside diameter of the outer end of nut 14. Inside lead screw 30 has threads 32 which engage corresponding threads 34 on the inside aspect of the inner end of nut 14.

Inside lead screw 30 also has a slot 36 for insertion of a Bowden cable wire end bullet for anchoring the wire. It is immaterial whether the traction cable wire is attached one lead screw or the other, as long as the traction cable sleeve is attached to the other.

Outside lead screw 20 may also have a shaft 40 which extends inward and inserts into the hollow cylindrical core inside lead screw 30.

Figure 1 shows the actuator in its untensioned or relaxed position. In this position, the ergonomic device, for example a lumbar support, would be in a non-weight supporting or flat position. Figure 2 is also a cut away side view of the actuator. Figure 2 is in the extended or tensioned position, corresponding to an extended, weight supporting position for the lumbar support on the other end of the Bowden cable. In figure 2, the outside lead screw 20 is in its extended position such that its outside aspect is moved farther outward, beyond the limits of the nut 14. The inner lead screw 30 has also been extended to project in the inward direction (relative to the seat) beyond the limit of nut 14 in housing 10.

Outer lead screw 20 has threads 22 engaging nut threads 24, which threads are in a first direction. Whether this direction is right or left handed is immaterial, provided that the outer lead screw is threaded in the opposite direction from the threads 32 and 34 of inner lead screw 30 and the inner end of nut 14. Thus configured, rotation of the nut 14 causes both lead screws 20 and 30 to extend relative to housing 10 and nut 14, in opposite directions.

Figure 2 depicts the outer lead screw 20 and inner lead screw 30 in their extended positions after having been translated to those extended positions by rotation of nut 14. In figure 2 shaft 40 can be more clearly seen.

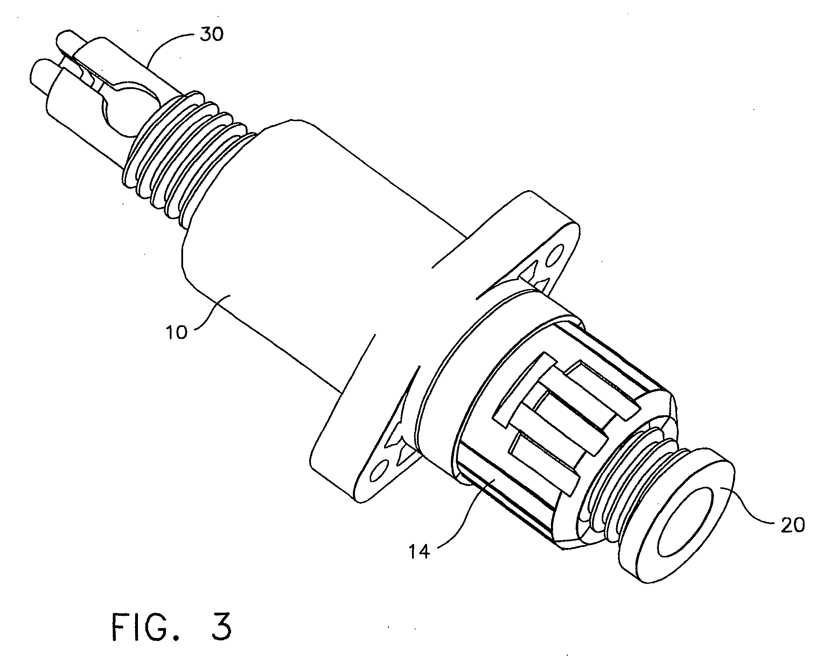

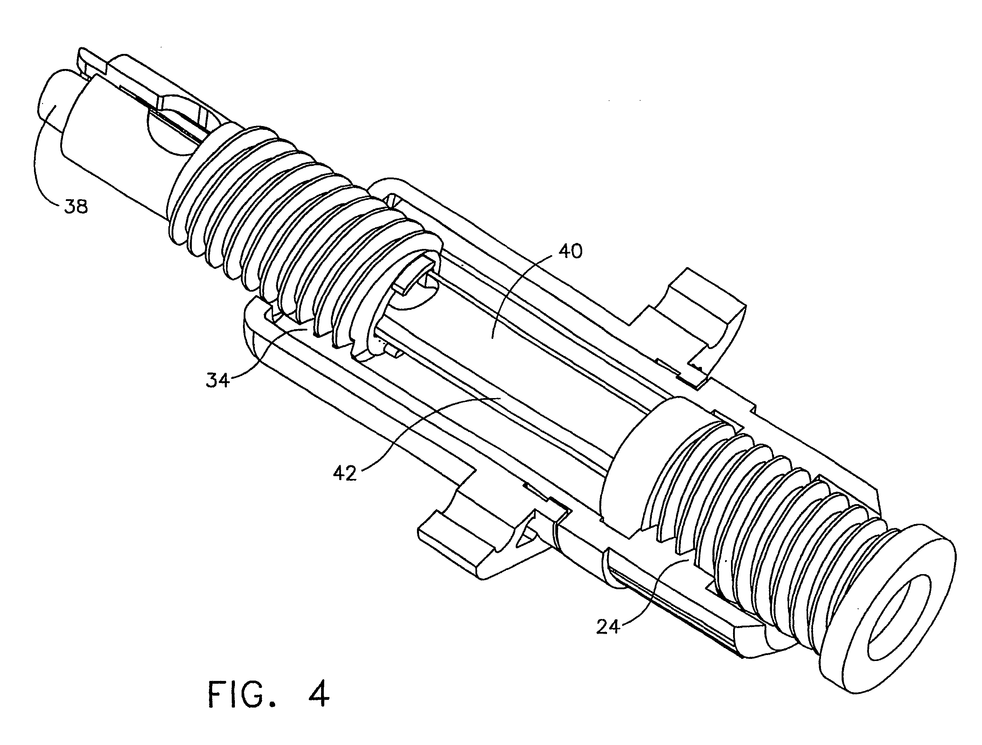

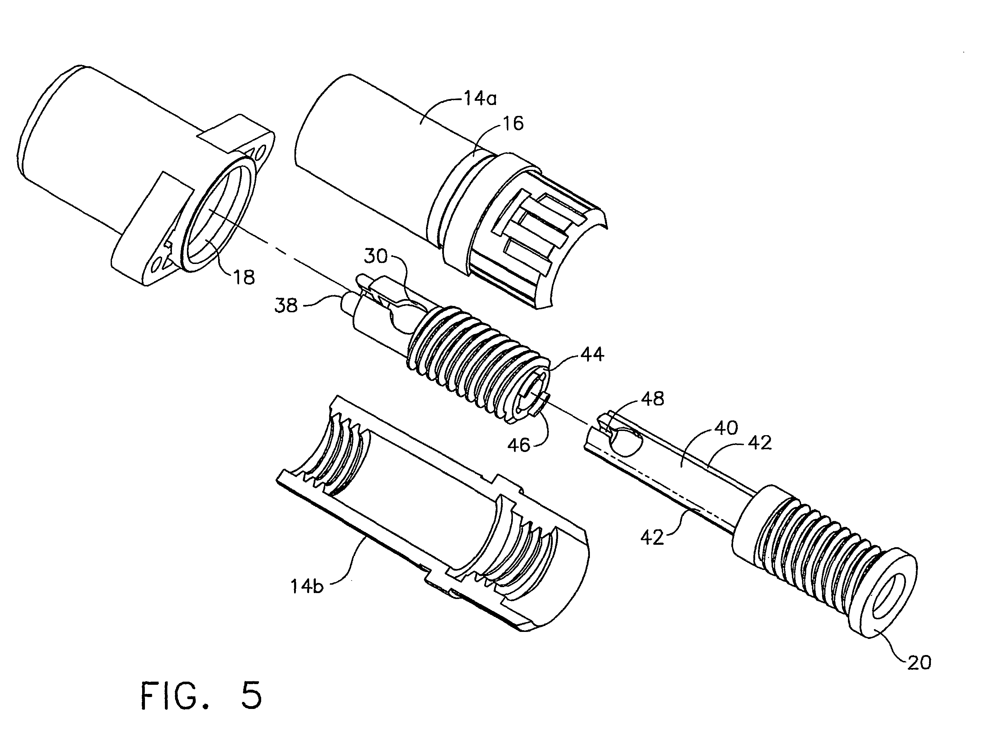

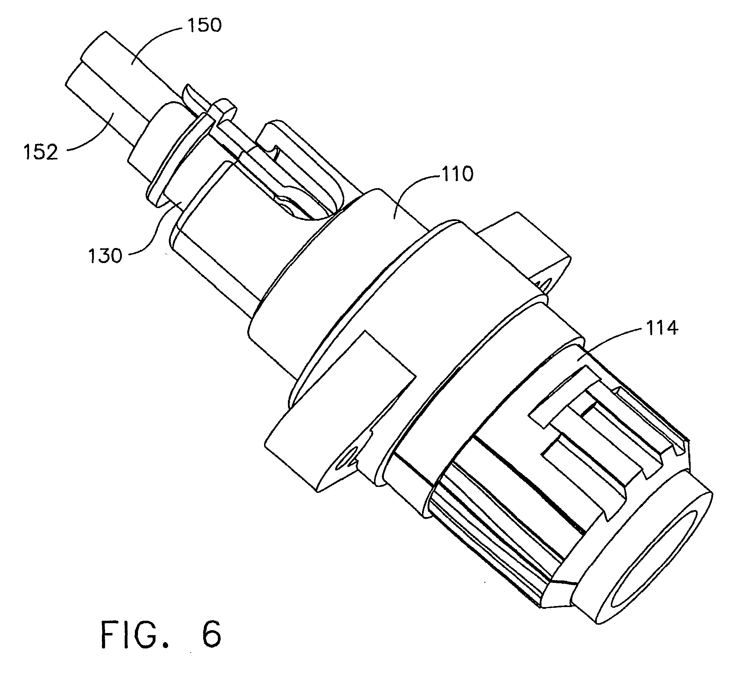

Figure 3 is a perspective view of the assembled actuator. Figure 4 is a cut away perspective view of the actuator. Both figures 3 and 4 show the actuator with the lead screws in their extended, tensioned position.

Figure 5 is an exploded view of the actuator. In figure 5 additional aspects of the actuator are visible. Shaft 40 has longitudinal ribs 42, which fit into longitudinal channels 44, in the inside diameter of hollow inner lead screw 30. The sliding of ribs 42 along interlocking channels 44 insure that lead screws 20 and 30 translate longitudinally in and out and do not rotate upon rotation of nut 14. Also visible on figure 5 is Bowden cable wire bullet seat 48. Bowden cable wires slide axially through Bowden cable sleeves. On the end of the Bowden cable wires and extending slightly beyond the end of the sleeves are "bullets," which are bosses or any other variety of end stops that are wider than the Bowden cable sleeve channel, to prevent the wire sliding out of the Bowden cable, and also for anchoring the Bowden wire end. Seat 48 in shaft 40 receives the wire end bullet in order to hold it in place and apply tension to it

Inner lead screw 30 has a collar 38 which engages the Bowden cable sleeve end and anchors it for the application of tension. Alternatively, a bolt with opposite handed threads may rotate to translate in opposite directions two nuts engaged to it, one nut having a traction cable sleeve attached to it and the other nut having the traction cable wire attached to it.

In operation, a seat occupant manually turns nut 14. Nut threads 24 and 34 engage threads 22 and 32 of outer lead screw 20 and inner lead screw 30. Because the threads of the lead screws run in opposite directions, turning the nut 14 will drive the inner and outer lead screws away from each other and outwards relative to the nut 14 in housing 10. Driving outer lead screw 20 outward exerts tension on a Bowden cable wire through the wire seating at seat 48. The opposite end of the Bowden cable wire will be drawn inwards towards the opposite end of the Bowden cable sleeve, which actuates movement of the ergonomic device.

In the prior art a similar tension is exerted to draw a Bowden cable wire axially through a Bowden cable sleeve in order to actuate the ergonomic device. However, in the prior art the Bowden cable sleeve end was held in a static position. In both the prior art and the present invention, outer lead screw 20 serves as a traveling member that translates axially when nut 14 rotates. When the traveling member lead screw 20, translates, it draws the traction cable wire out of the traction cable sleeve and exerts tractive force on the wire.

In the actuator of the present invention, inner lead screw 30 extends inward relative to the frame of the automobile seat simultaneously with the opposite, outward extension of the traveling member, outer lead screw 20. This moves the Bowden cable sleeve end, which is anchored at collar 38 of inner lead screw 30, inward towards the automobile seat and further away from the Bowden cable wire end, anchored in seat 48. Hence inner lead screw 30 acts as a traction cable travel multiplier in the present invention by multiplying the amount the wire and sleeve travel relative to one another for each turn of drive nut 14.

Increasing separation of the Bowden cable sleeve end from the Bowden cable wire end achieves the desired tension at the opposite end of the Bowden cable needed to actuate the ergonomic device. By moving both the sleeve end and the wire end simultaneously and in opposite directions, the same degree of rotation put on the drive nut 14 achieves twice as much separation between the sleeve end and the wire end as would have been achieved by prior art actuators, which only moved the wire end and not the sleeve end. Accordingly, the same degree of tension can be put on the ergonomic device at the other end of the Bowden cable with half the number of rotations by the seat occupant of the nut 14. This increased convenience to the user has value in the market place.

Typical thread pitches for manual actuators already in production may be in the range of about 2.5 millimeters of linear travel per rotation. It is known to double this pitch by using double lead in threading, which yields a pitch of substantially about 5 millimeters of linear travel per revolution of the nut. Double threading is simply die cutting screw and nut with two helically intersperced threads. Whereas a single thread manual actuator may yield 7.5 millimeters of lumbar support travel in, for example, three rotations, a double threaded variety would yield 15 millimeters of travel in three rotations. The present invention at least doubles this ratio, allowing 30 millimeters of lumbar support travel with three turns of the double threaded manual actuator nut in the telescoping actuator disclosed herein. Thirty millimeters represents the complete range of travel for many lumbar supports.

Exploded view 5 also illustrates aspects of the invention that promote ease of assembly. Nut 14 is split into two halves, 14A and 14B so that lead screws 20 and 30 may be laid into their proper place in the threads on the inner aspect of nut 14. Outer lead screw 20 has a shaft 40 inserted into the inner channel of inner lead screw 30 by an assembler. Proper spacing between outer lead screw 20 and inner lead screw 30 before assembly is insured and maintained by bosses 46 on the outer aspect of the inner lead screw 30. The lead screws 20 and 30 are then laid into the threads of half the nut 14B by an assembler. Thereafter the other half of the nut 14A is laid over the lead screws and the entire assembly is inserted into housing 10 until ring 16 snaps into collar 18.

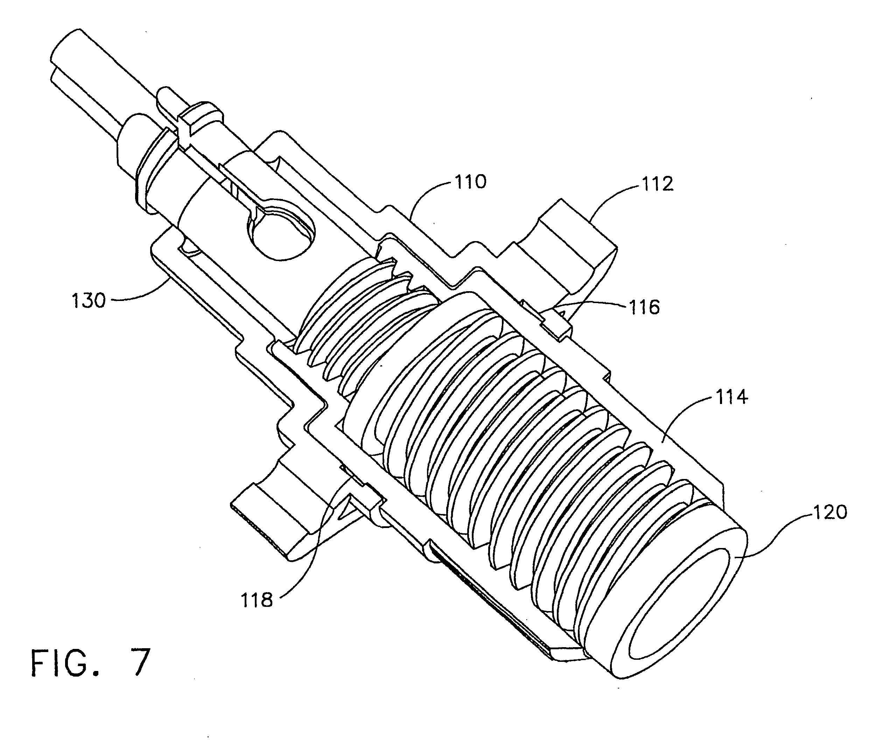

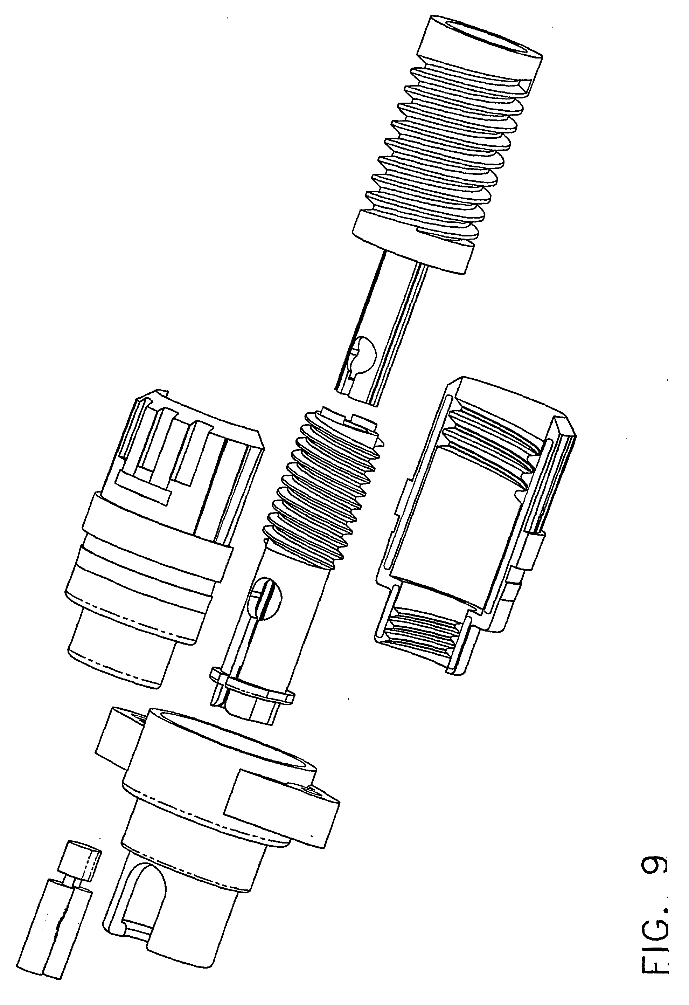

Space saving is a constant priority for automotive passenger compartment components. Inside a seat, passenger comfort devices have proliferated, including ergonomic supports, heating and cooling ducts, and the like. Outside the seat, lower profile seat controls simplify interior design and are more convenient for passengers by virtue of not obstructing seat belts, coats, and the like. Figures 6 through 9 illustrate a more compact alternative embodiment of the present invention. This embodiment saves space by telescoping one lead screw into the other.

Figure 6 is a perspective view of the assembled telescoping actuator in a contracted, untensioned position. Figure 7 is a cut away perspective view of the same embodiment in the same position. As can be seen, housing 110 and nut 114 are shorter in their axial dimension than the previously depicted embodiment.

This space saving is made possible by the innovation of telescoping one of the lead screws into the other. In this case, the outer lead screw 120 has an inner cylindrical opening dimensioned to receive insertion of the outer diameter of inner lead screw 130. Again, outer lead screw 120 is the traveling member and inner lead screw 130 is the travel multiplier. Accordingly, the overall length of the unit may be reduced by the extent to which the inner lead screw may be inserted or telescoped into the outer lead screw 120. Either lead screw may telescope into the other. The inner aspect of the female lead screw may be a smooth, or threaded to engage the male lead screw.

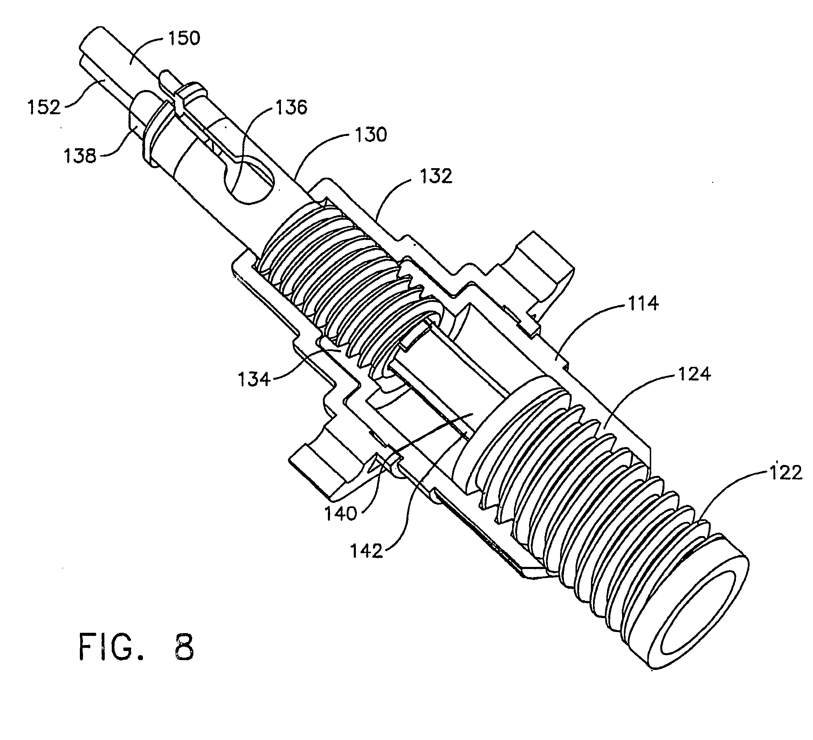

Figure 8 is a perspective cut away view of the telescoping actuator in its extended or tensioned position. As can be seen in figure 8, the interaction of the components is the same as in the previous embodiment Nut 114 has threads 124 and 134 engaged with outer lead screw threads 122 and inner lead screw threads 132. Shaft 140 has ribs 142 preventing rotation of the outer lead screw. Ring 116 seats within annular detent 118. Housing flanges 112 support mounting screw shafts. Inner lead screw 130 has a Bowden cable wire and wire bullet insertion slot 136. Inner lead screw 130 also has a Bowden cable sleeve mounting collar 138.

Figure 6 through 9 also illustrate another capability of the present invention, which is the actuation of two Bowden cables simultaneously with a single actuator. As is best seen in figures 6, 7 and 8, the inner lead screw 130 accepts insertion of two Bowden cables 150, and 152. Bowden cable wire and wire bullet insertion slot 136 on the top surface of inner lead screw shaft 130 is mirrored by a corresponding insertion slot (obscured) on the bottom surface of inner lead screw shaft 130. Since the lead screws only translate, and do not rotate, it is well within the capabilities of the present invention to actuate two (or more) Bowden cables simultaneously.

### The Pulley Embodiments

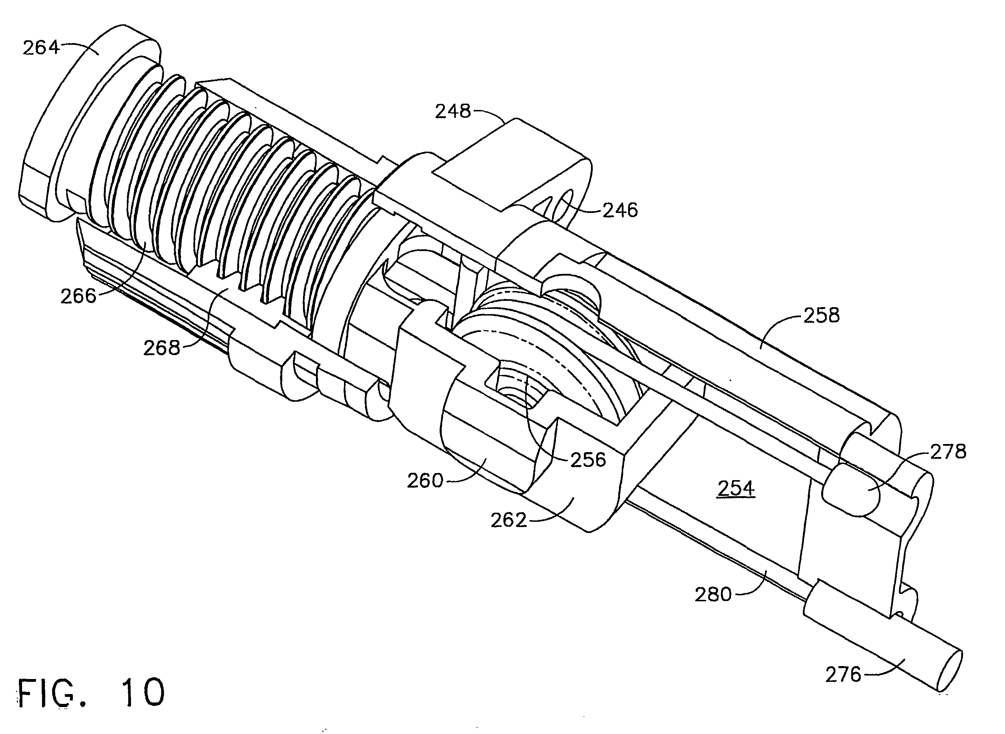

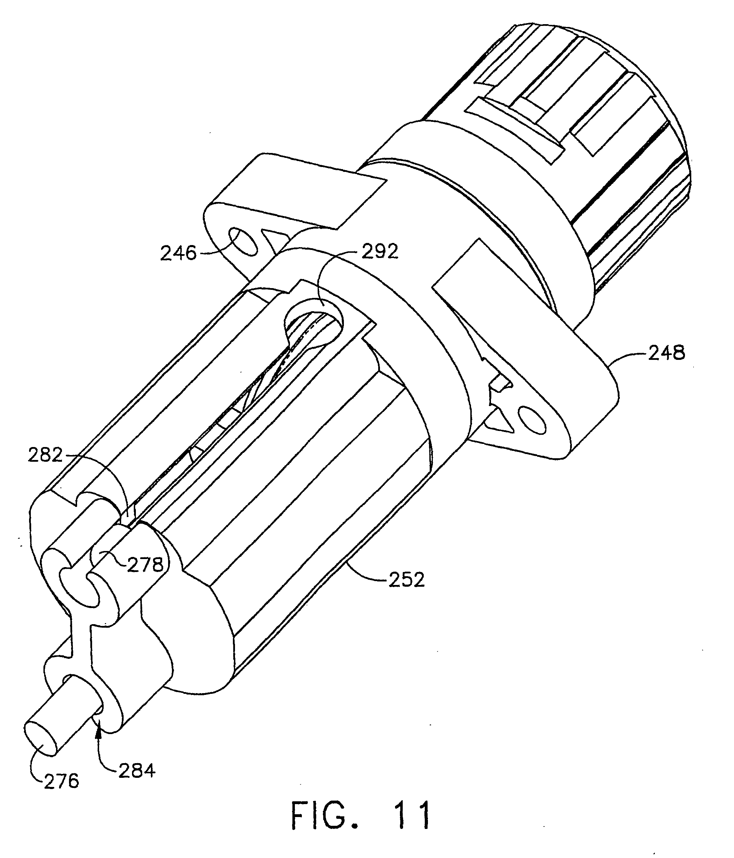

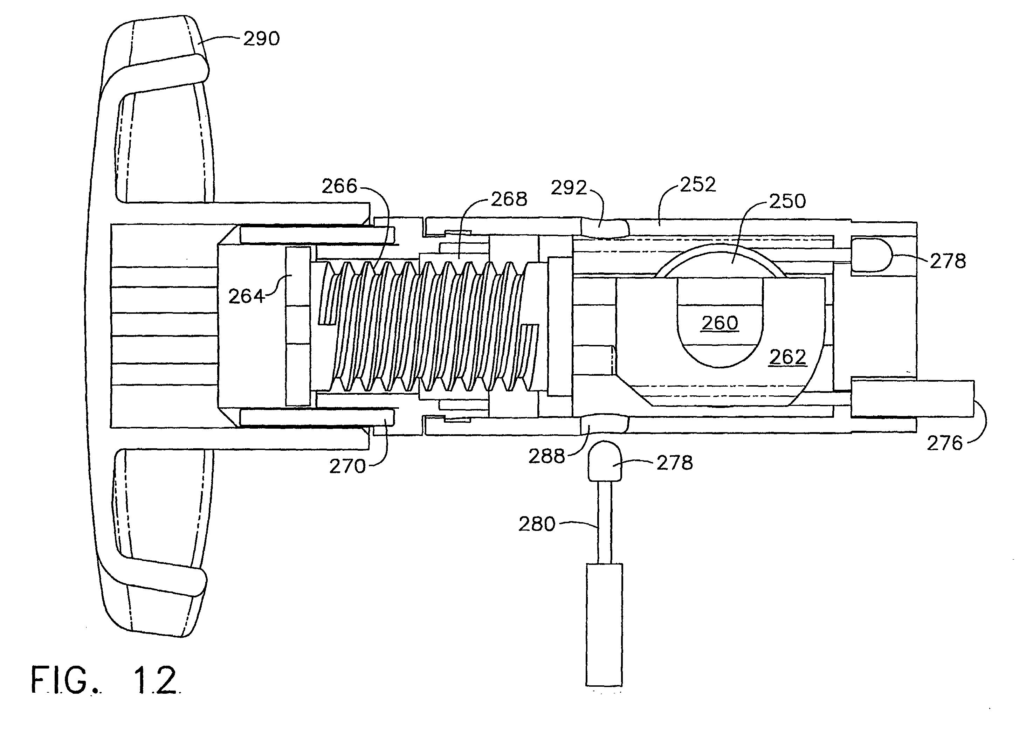

Referring to the accompanying figures wherein like reference numbers indicate like elements, figures 10 through 14 are all views of the pulley actuator. Figure 12 is a cut-away side view. Figures 10, 13 and 14 are cut-away perspective views. Figure 11 is a perspective view. The operational components of each figure are the same.

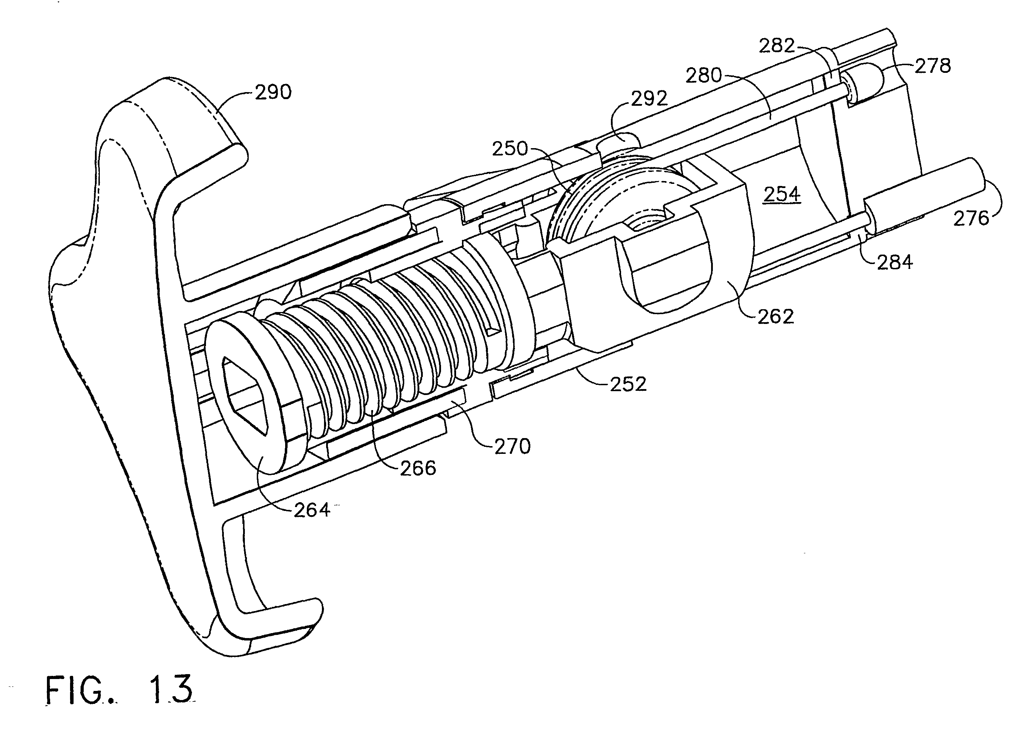

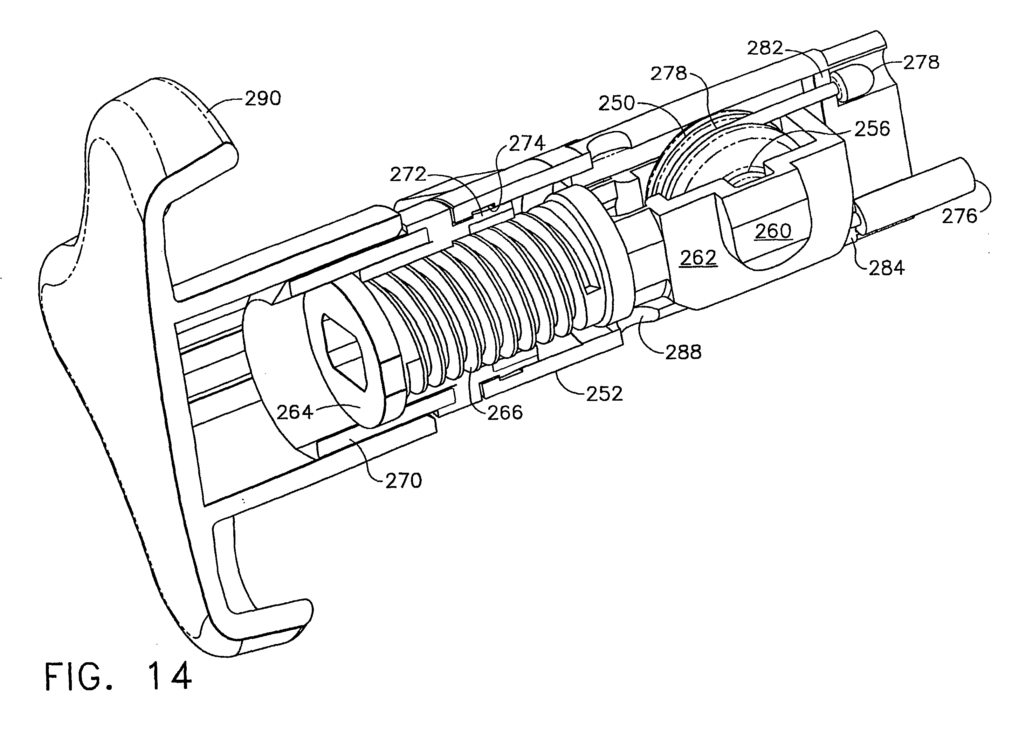

Figures 10 and 13 show the pulley actuator and its extended, tensioned position. Figures 12 and 14 show the pulley actuator in its compressed, untensioned position.

Figures 10 and 11 show one of two brackets, 248, with screw holes, 246, for mounting the actuator to a seat frame.

Figures 12 through 14 show the pulley actuator with a handle on the nut.

In the depicted embodiment, pulley 250 is encapsulated within pulley housing 252. Housing 252 has a space 254 for a pulley travel. Pulley 250 has an axle 256 and a channel 258. Pulley axle 256 rides in pulley axle seat 260. Pulley axle seat 260 is a part of a pulley cradle or bracket 262. Pulley cradle 262 is fabricated as a single piece with screw 264.

Screw 264 has threads 266 which engage complimentary threads 268 inside nut 270. Nut 270 is inserted into housing 252 and held there by the interlocking of collar 272 with annular detent 274.

Tensioning wires such as Bowden cables are coaxial cables having a wire disposed to slide axially through a sleeve or conduit. One end of the Bowden cable is attached to a device to be moved with the Bowden cable sleeve end anchored to one portion of the device and the Bowden cable wire end anchored to another portion of the device. Traction on the Bowden cable wire draws the portion of the device anchored to the wire towards the portion of the device anchored to the sleeve, thereby achieving the desired motion of the device. This traction is applied by an actuator.

At the actuator end of the Bowden cable there a sleeve end, 276, and a wire end having a bullet, 278, for anchoring it. In the present actuator, the wire itself, 280, is wrapped around the pulley 250 and seated in pulley channel 258. Wire end bullet 278 is seated in wire end seat 282. Cable sleeve end 276 is seated in cable sleeve seat 284. Seats 282 and 284 hold the wire and sleeve ends, respectively, in place while traction is applied to wire 280.

Figures 12 through 14 show the pulley actuator with a handle 290 on the nut 270.

In operation, a seat occupant manually turns nut 270. Nut 270 rotates without translating, because it is held in place by collar 272 seated in housing 252. Threads, 268, on the inside diameter of nut 270 engage threads 266 on screw 264 and, when turned, cause screw 264 to translate axially out of housing 252. Pulley cradle 262 translates outward with screw 264, carrying with it pulley 250. Pulley 250 exerts an outward force on wire 280. Since the end of the wire is anchored at 278, wire 280 is pulled axially out of sleeve 276. In this manner, the desired traction is applied to the Bowden cable, actuating the movement of the ergonomic device at the other end of the Bowden cable.

It is apparent that for a single unit of distance traveled axially by the screw 264, the wire 280 must extend at least twice that distance. The wire, 280, must extend from the sleeve to the pulley an amount equal to the screw (and pulley) travel, and the wire, 280, must also extend that distance again for expansion from the pulley to the wire end bullet, 278. In this manner, the pulley/screw combination achieves the purpose of the present actuator by producing an effective drawn length of wire 280 that is greater than the translated distance of screw 264. Accordingly, a user has to turn nut 270 fewer times to achieve the same amount of wire travel as would be necessary with an actuator that did not combine the novel pulley/screw combination of the present invention. More specifically, assuming this same ratio of screw threads to screw length, the same degree of rotation on the nut of the present invention will draw the wire 280 out at least twice as far as that degree of rotation would draw the wire out in a prior art pulley-less actuator.

In the prior art tension was also exerted to draw a Bowden cable wire axially through a Bowden cable sleeve in order to actuate the ergonomic device. However, the prior art anchored the end of wire 280 directly to screw 264. The actuator of the present invention achieves twice as much separation between the sleeve end and the wire end as would have been achieved by prior art actuators. Accordingly, the same degree of tension can be put on the ergonomic device at the other end of the Bowden cable with half the number of rotations by the seat occupant of the nut, 270. This increased convenience to the user has value in the market place.

Typical thread pitches for manual actuators already in production may be in the range of about 2.5 millimeters of linear travel per rotation. It is known to double this pitch by using double lead in threading, which yields a pitch of substantially about 5 millimeters of linear travel per revolution of the nut. Double threading is simply die cutting screw and nut with two helically intersperced threads. Whereas a single thread manual actuator may yield 7.5 millimeters of lumbar support travel in, for example, three rotations, a double threaded variety would yield 15 millimeters of travel in three rotations. The present invention at least doubles this ratio, allowing 30 millimeters of lumbar support travel with three turns of the double threaded manual actuator nut in the telescoping actuator disclosed herein, or 10 millimeters per rotation. Thirty millimeters represents the complete range of travel for many lumbar supports, although some have ranges up to 60 millimeters.

Figures 10-12 are different views of the assembled pulley actuator of the present invention. These figures clearly depict the keyhole slots, 288, and 292, incorporated to ease assembly of the pulley actuator. Wire end bullet 278 is inserted through the wide portion of slot 288, first on the sleeve seat side depicted in Figure 12. Then through wide portion of slot 292 to the wire seat 282 side of the housing, 252. The wire 280 seats in pulley channel 258. An assembler pulls wire 280 far enough so that wire and bullet 278 can be placed in wire end seat 282 and then drawn tight into its seated position. Sleeve end, 276, is seated in sleeve seat, 284. The wire is drawn tight through slots 288 and 292. Figure 12 shows the Bowden cable wire end and end bullet, 278, oriented to be inserted in keyhole widening of slot 288.

It is considered to be within the scope of the present invention that two or more Bowden cables may be actuated simultaneously with a single actuator. This is achieved by mounting two pulleys on the lead screw, and threading two or more Bowden cable wires through them. Alternatively, it may be achieved by doubling the width of the channel, 258, in pulley, 250, and seating two wires in it.

It is considered to be within the scope of the present invention that greater nut turn to wire travel ratios may be achieved by varying the diameter of the pulley. Greater nut turn to wire travel ratios may also be achieved by threading a single Bowden cable wire around two or more pulleys, with all of the pulleys attached to the lead screw.

The components of the present invention are preferably plastic, most preferably polyurethane. Various components will be comprised of various formulations of polyurethane as for example seeking a higher glass fill content in the housing 210 in order to stiffen it for rigidity and acceptance of self seating mounting screws. The nut 214 and lead screws 220 and 230 more preferably have a slicker formulation of polyurethane, for example nylon 266, to achieve the desired coefficient of friction. Ease of use and maintenance of position are achieved in the depicted embodiments with the coefficient of friction between the nut threads 224 and 234 and the lead screw threads 222 and 232 in a range from about 0.08 to about 0.14.

The depicted embodiments are shown with screw thread dimensions empirically found to work well with lumbar supports currently marketed, in view of the tensions created by those lumbar supports on Bowden cables and the wire that slides through them. The depicted embodiments have a screw thread pitch of 2.48 millimeters, a lead of 4.96 millimeters, a basic thread thickness at the pitch of 1.23 millimeters, a basic flat at the crest of 0.57 millimeters, a root flat thickness of 0.57 millimeters, a major diameter of 15.9/15.6 millimeters, a pitch diameter of 14.45/14.15 millimeters and minor diameter of 12.84/12.54 millimeters in a basic thread height of 1.53 millimeters. For these screw dimensions, it is found to be beneficial and efficient to mix the polyurethane used for the lead screw and nut to yield a coefficient of friction in the range from about 0.08 to about 0.14. It is contemplated to within the scope of this invention that other pitch dimensions and other coefficients of friction may optimize the mechanical efficiency of the disclosed novel design should the actuator be applied for use with tensioning cables other than the currently used Bowden cable, lumbar supports other than the currently used lumbar supports, or different dimensions of the mechanical aspects of the novel designs disclosed.

### Combined Embodiments

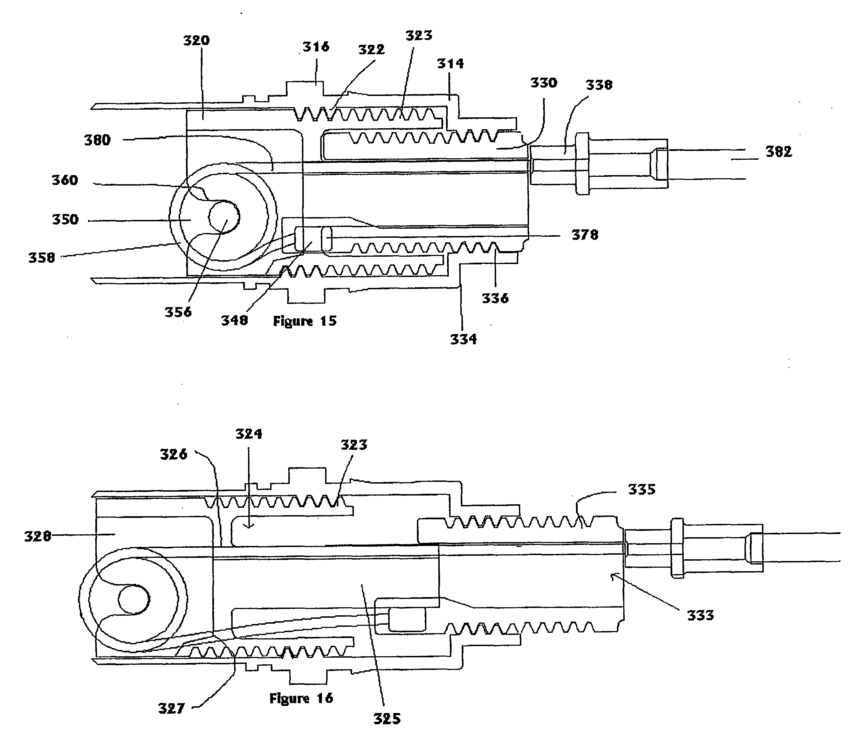

Figure 15 is a cutaway side view of an embodiment combining telescoping lead screws and a pulley in a contracted, in a relaxed position. Figure 16 is a cutaway side view of an embodiment combining telescoping lead screws and a pulley in an extended, tensioned position.

Nut 314 is disposed to turn within a cylindrical housing (not shown). Annular ring 316 on nut 314 retains nut 314 in the housing through its interlocking with an annular detents in the housing. This prevents axial movement of nut 314. On an inner surface nut 314 has a first set of screws 322 which interact with a set of screws 323 on an outer lead screw 320. Nut 314 also has a step or offset 334 having a second set of threads 336 that interacts with threads 335 on an inner lead screw 330. The first set of threads, 322 and 323, are opposite handed relative to the second set of threads 335 and 336.

Outer lead screw 320 includes an annular indentation 324 between its threads 323 and inner shaft 325. Indentation 324 allows for the telescoping travel of inner lead screw 330 into the profile of outer lead screw 320. This telescoping configuration creates two advantages. First, the overall package size of the actuator is more compact, allowing for greater freedom of deployment design and usage in seats. Secondly, the telescoping design, combined with the counter rotation of the two lead screws, multiples the travel of the Bowden cable achieved by each turn of the nut 314. This multiplying feature is achieved by the fact that the outer lead screw threads 322 and 323 are opposite handed from the inner lead screw threads 335 and 336. The opposite handed configuration causes turning drive nut 314 a first distance to move outer lead screw 320 in the outward direction while simultaneously moving inner lead screw 330 in an inward direction, so that the sleeve end and wire end move a second distance relative to one another. The second translating distance is farther than the first rotational distance.

Outer lead screw 320 also has an axial, medially located shaft 325. Shaft 325 is long enough to maintain its close cooperation with axial hole 333 of inner lead screw 330 even when the telescoping pulley actuator is at its most extended, tensioned position (see Figure 16). Thus, shaft 325 maintains the stability of the unit at all positions.

Outer lead screw 320 also has two through holes 326 and 327 through which a Bowden cable wire 380 is passed to and from pulley 350. Through holes 326 and 327 are dimensioned so that Bowden cable wire 380 may slide freely through them.

Inner lead screw 330 has a seat 338 for a Bowden cable sleeve 382. Bowden cable wire 380 may precede through inner lead screw 330 through inner axial hole 333 of inner lead screw 330, so that wire 380 can thereafter slide through a groove in inner lead screw inner shaft 325. Alternatively, wire 380 may proceed through a separate through hole (not shown) in inner lead screw 330. Inner lead screw 330 also has a seat 348 for a Bowden cable wire end bullet 378. Bowden cable sleeve seat 338 is disposed upon and attached to inner lead screw 330 such that sleeve seat 338 may rotate with the movement of inner lead screw 330, so as not to bind or otherwise interfere with the axial movement of Bowden cable wire 380 through sleeve 382 upon movement of the actuator.

Lead screw 320 also has cradle 328 for seating pulley 350. Pulley axle 356 seats in pulley axle seat 360.

In assembly, a Bowden cable wire 380 with its bullet end 378, is drawn from a Bowden cable sleeve 382 through inner hole 333 of inner lead screw 330, through hole 326 of outer lead screw 320 and then around pulley 350 where it is seated in pulley channel 358. Thereafter wire 380 is wrapped around pulley 350 and returned through hole 327 of outer lead screw 320 and, via a key hole groove or other known technology (not shown) is seated in Bowden cable wire bullet seat 348 of inner lead screw 330. Shaft 325 of outer lead screw 320 is inserted into hole 333 of inner lead screw 330, and this combined assembly is installed in a first nut half which is fabricated in a split manner identical to that depicted in exploded figure 5. A second half (not shown) of nut 314 is overlaid over the assembly in a complementary fashion, thereby encapsulating the assembled lead screws and Bowden cable. Insertion of the halves of nut 314 into a housing holds them together.

In operation, turning of nut 314 within its housing (not shown) by a lever or hand crank (not shown) causes, through thread combinations 322 and 323 for outer lead screw 320 and thread combinations 335 and 336 for inner lead screw 330, the opposite extension of both lead screws. Opposite extension is achieved through the opposite handed configuration of the two respective thread assemblies. The inward extending movement of inner lead screw 330 pushes Bowden cable sleeve 382 in a first direction. The outward extension of outer lead screw 320 pulls the Bowden cable wire 380 in a second direction. This telescoping action multiplies the travel of Bowden cable wire 380 relative to Bowden cable sleeve 382 so that its axial movement is greater than the rotational movement of nut 314. The movement of Bowden cable wire 380 is multiplied a second time by the action of the pulley 350. Bowden cable wire 380 wraps around pulley 350 in the pulley channel 358 so that the movement of the pulley via its axle 356 leads to an increased amount of travel for wire 380, according to known mechanical principles. In one preferred embodiment, the compressed package size of outer lead screw 320, inner lead screw 330 and pulley 350 is less than 60 millimeters, while the travel that can be achieved by operation of the assembly is multiplied to over 50 millimeters for only three turns of nut 314. With full extension of the referenced one preferred embodiment, the overall package length of inner lead screw 320, inner lead screw 330 and pulley 350 is approximately 84 millimeters.

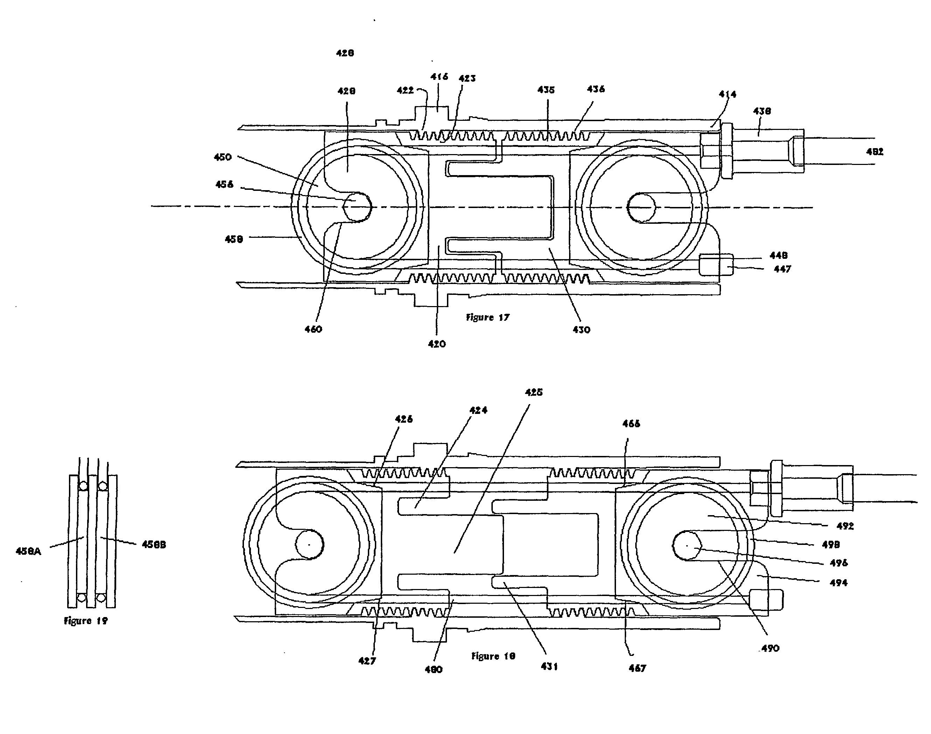

Figures 17 and 18 are cutaway side views of a two pulley embodiment in a compact, relaxed position and in an extended, tensioned position, respectively.

As in the previously described embodiment, nut 414 is disposed within the housing (not shown) and engaged with it by collar 416 such that nut 414 rotates but does not translate axially. On its inner aspect, nut 414 has a first set of threads 422 which is of an opposite hand from a second set of threads 436.

The pulley embodiment also has an outer lead screw 420 and an inner lead screw, 430. The interaction of the inner and outer lead screws 420 and 430 with each other and with nut 414 is functionally identical to the interaction of the lead screws and nut in the previously described embodiment. A first handed set of threads 422 and 423 in outer lead screw 420 and nut 414 cause an outward extension of lead screw 420 upon rotation upon nut 414. A second, opposite handed thread set 436 and 435 cause an inward extension of inner lead screw 430 upon rotation of 414. Outer lead screw 420 has an axial shaft 425 that interacts with an axial hole 433 in lead screw 430 in close cooperation in order to maintain a stable relationship between the two. Shaft 425 may have longitudinal ridges that correspond to longitudinal grooves in axial hole 333 of inner lead screw 430, to prevent rotation of the two lead screws relative to one another. Inner lead screw 430 has an annular extension 431 which closely cooperates with the annular detent 424 of outer lead screw 420.

As described in the previous embodiment, outer lead screw 420 has a cradle 428 with a pulley axle seat 460 for housing a pulley 450. Pulley 450 has an axle 456 dimensioned to closely cooperate in its disposition in pulley axle seat 460. Also as described in the previous embodiment, Bowden cable sleeve 482 is attached to inner lead screw 430 by seat 438. Bowden cable wire 480 proceeds through holes 426, 427 in outer lead screw 420 to and from pulley 450.

The embodiment depicted in figures 17 and 18 includes a second pulley 492 mounted in cradle 494, which is an integral part of inner lead screw 430. Inner pulley cradle 494 also has a pulley axle seat 490. Inner pulley 492 is mounted in cradle 494 by placing pulley axle 496 in seat 490. Inner pulley 492 has a single wire channel 498.

In the embodiment depicted in figures 17 and 18, the single Bowden cable wire 480 travels from the sleeve 482 into a first through hole 466 in inner lead screw 430, and then through the first through hole 426 in outer lead screw 420. Cable wire 480 then wraps around outer pulley 450 in a first outer pulley channel 458A, best seen in front view figure 19. From first channel 458A the Bowden cable wire 480 then proceeds through a second through hole 427 in outer lead screw 420. From through hole 427, the Bowden cable wire proceeds through a second through hole 467 in the inner lead screw 430. Thereafter Bowden cable wire 480 wraps around inner pulley 492 in inner pulley channel 498. Thereafter Bowden cable wire 480 proceeds back towards outer pulley 450 and through a third hole (not shown) in inner lead screw 430. The third hole in lead screw 430 may be separate from the first hole 466 and disposed adjacent to it in a position that is obscured in figures 17 and 18. Alternatively, first inner lead screw hole 466 may be dimensioned so that it is wide enough to accommodate twice the diameter of the Bowden cable wire 480 and with sufficient space to allow sliding of both portions of Bowden cable wire 480 through hole 466 without an unreasonable amount of friction.

Bowden cable wire 480 then proceeds back through a third through hole (not shown) in outer lead screw 420 around a second channel 458B and outer pulley 450 and back through a fourth through hole (not shown) in outer lead screw 420. Again, design alternatives for the third and fourth through holes in outer lead screw 420 include separate holes from first through hole 426 and second through hole 427 in outer lead screw 420, positioned adjacent to them and in a manner that would be obscured in figures 17 and 18. Alternatively, through holes 426 and 427 and outer lead screw 420 may be dimensioned so as to accommodate two portions of Bowden cable wire 480 adjacent to one another.

Finally, Bowden cable wire 480 proceeds back through a fourth through hole (not shown) in inner lead screw 430, which again may alternatively be an oblong or wider dimension for second through hole 467 in inner lead screw 430. Thereafter, Bowden cable bullet 478 at the end of the Bowden cable wire 480 is seated in seat 448, an integral portion of inner lead screw 430.

Assembly operates as previously described, with Bowden cable wire 480 being threaded through lead screw holes and around inner and outer pulleys and thereafter the assembly being encapsulated between two halves of nut 414, to be then installed in a housing.

In operation, rotation of nut 414 by a hand wheel or lever (or geared connection with an electric motor) turns opposite handed threads 422 and 436. The threading 423 and 435 of lead screws 420 and 430 extend each lead screw in opposite directions outwards and inwards respectfully. This technique multiplies the travel of the Bowden cable wire 480 relative to each turn or portion of a turn by nut 414.

The addition to the first pulley 450, the second, inner pulley 492 again increases the mechanical multiplication of Bowden cable wire 480 travel relative to rotation of nut 414. For each unit of distance moved by each pulley axle 456 and 496, the Bowden cable wire 480 must travel twice as far. Since each pulley 450 and 492 are moved in opposite directions by rotation of nut 414, the Bowden cable wire must extend four times as far in the two pulley embodiment as it would without pulleys.

In view of the foregoing, it will be seen that the several advantages of the invention are achieved and attained.

The embodiments were chosen and described in order to best explain the principles of the invention and its practical application to thereby enable others skilled in the art to best utilize the invention and various embodiments and with various modifications as are suited to the particular use contemplated.

As various modifications could be made in the constructions and methods herein described and illustrated without departing from the scope of the invention, it is intended that all matter contained in the foregoing description or shown in the accompanying drawings shall be interpreted as illustrative rather than limiting. Thus, the breadth and scope of the present invention should not be limited by any of the above described exemplary embodiments, but should be defined only in accordance with the following claims appended hereto and their equivalents.

## Claims

1. A travel actuator having a housing (10; 110) and having at least one traveling member (20; 120; 264; 320; 420), the actuator having a traction cable wire mount for a wire (280; 380; 480) on the housing (10; 110) or on the traveling member (20; 120; 264; 320; 420) and the actuator having a traction cable sleeve mount for a sleeve (76; 382; 482) on the housing (10; 110) or on the traveling member (20; 120; 264; 320; 420), the actuator also having a drive nut (14; 114; 270; 314; 414) operatively engaged with the housing (10; 110) and the traveling member (20; 120; 264; 320; 420) such that when the drive nut (14; 114; 270; 314; 414) moves the traveling member (20; 120; 264; 320; 420) a first distance, the wire (280; 380; 480) and the sleeve (76; 382; 482) move a second distance relative to one another,
**characterized in that**,
the actuator has a travel multiplier (30), or a travel multiplier with a telescoping traveler segment (130; 330; 430) or a travel multiplier with a telescoping traveler segment with a pulley (350), or a travel multiplier with two pulleys (450, 492), the multiplier (30; 130; 330; 430) being engaged with the traveling member (20; 120; 264; 320; 420) such that the second distance is greater than the first distance.

2. The actuator of claim 1, wherein said traveling member is a first lead screw (20; 120; 320; 420) and said travel multiplier is a second lead screw (30; 130; 330; 430).

3. The actuator of claim 1 or claim 2, wherein said drive nut (14; 114; 270; 314; 414) is mounted in said housing (10; 110) to rotate but not translate.

4. The actuator of claim 3, wherein said mount is telescopic.

5. The actuator of any one of claims 1-4, wherein one of the traveling member (120; 320; 420) or telescoping traveler segment (130; 330; 430) is screw mounted or shaft mounted in the other of the traveling member or the telescoping traveler segment.

6. The actuator of any one of claims 1-5, wherein said traction cable wire mount is on one of the traveling member (120; 320; 420) or the telescoping traveler segment (130; 330; 430) and the traction cable sleeve mount is on the other of the traveling member or the telescoping traveler segment.

7. The actuator of any one of claims 1-6, wherein the traction cable is a Bowden cable.

8. The actuator of any one of claims 1-7, wherein said traction cable wire mount includes a slot (36; 136; 288, 290, 292) for installation of the traction cable wire end.

9. The actuator of any one of claims 1-8, wherein said housing (10; 110), said traveling member (20; 120; 264; 320; 420) and/or said travel multiplying segment (30; 130; 330; 430) are made from polyurethane.

10. The actuator of any one of claims 1-9, wherein said traveling member is a first lead screw (20; 120; 320; 420) and said travel multiplier is a second lead screw (30; 130; 330; 430), and wherein said drive nut (14; 114; 270; 314; 414) is mounted in said housing (10; 110) in a fixed position and said first lead screw (20; 120; 320; 420) rotates and translates relative to said drive nut (14; 114; 270; 314; 414) and said second lead screw (30; 130; 330; 430) translates relative to said drive nut (14; 114; 270; 314; 414) and said first lead screw (20; 120; 320; 420).

11. The actuator of any one of claims 1-10, further comprising a second traction cable wire mount and a second traction cable sleeve mount.

12. The actuator of any one of claims 1-11, wherein one rotation of the drive nut (14; 114; 270; 314; 414) produces about 10mm of traction cable wire travel relative to the traction cable sleeve (76; 382; 482).

13. The actuator of any one of claims 1-12, wherein said traveling member is a first lead screw (20; 120; 320; 420) and said travel multiplier is a second lead screw (30; 130; 330; 430) with the pitch of threads of the first and second lead screws being in a range from about 2 to about 3mm.

14. The actuator of any one of claims 1-13, wherein the traveling member (20; 120; 320; 420) and the travel multiplier (30; 130; 330; 430) telescope into one another with a shaft (40; 140; 325; 425).

15. The actuator of claim 14, wherein the shaft (40; 140; 325; 425) has ridges (42; 142) to prevent rotation.

16. The actuator of claim 14 or claim 15, wherein either the traction cable wire mount or the traction cable sleeve mount is on the shaft (40; 140; 325; 425).

17. The actuator of claim 1, wherein said travel multiplier is comprised of a pulley (250) and a pulley cradle (262).

18. The actuator of claim 1, wherein the traction cable wire mount and the traction cable sleeve mount are both in the housing (10; 110) and positioned such that the traction cable wire (280; 380; 480) travels around one pulley (250; 350) or two pulleys (450, 492).

19. The actuator of claim 17, wherein said housing further includes at least one installation slot (288, 292).

20. The actuator of claim 1, further comprising a second pulley (450).

21. The actuator of any one of claims 1-20, wherein said drive nut (14; 114; 270; 314; 414) is driven by a lever or a handwheel (290) or a motor.

22. The actuator of claim 1, wherein said travel multiplier is comprised of a first lead screw (20; 120; 320; 420) rotating relative to said drive nut (14; 114; 270; 314; 414) and said traveling member is a second lead screw (30; 130; 330; 430) telescoping into or around said first lead screw (20; 120; 320; 420).

23. The actuator of claim 1, wherein said travel multiplier is comprised of a telescoping traveler segment with a pulley cradle (262) and a pulley (250).

24. The actuator of claim 1, wherein said traveling member (420) has a pulley cradle (428) and a pulley (450) and said travel multiplier (430) is comprised of a telescoping traveler segment with a pulley cradle (494) and a second pulley (492).

25. The actuator of claim 1, wherein said wire (480) makes three turns around two pulleys (450,492).

## Patentansprüche

1. Verstellaktuator, welcher ein Gehäuse (10; 110) und mindestens ein Verstellteil (20; 120; 264; 320; 420) besitzt, wobei der Aktuator eine Seilzugdrahtanbringung für einen Draht (280; 380; 480) an dem Gehäuse (10; 110) oder an dem Verstellteil (20; 120; 264; 320; 420) besitzt und der Aktuator eine Seilzughüllenanbringung für eine Hülle (76; 382; 482) an dem Gehäuse (10; 110) oder an dem Verstellteil (20; 120; 264; 320; 420) besitzt, wobei der Aktuator auch eine Antriebsmutter (14; 114; 270; 314; 414) besitzt, welche sich wirksam mit dem Gehäuse (10; 110) und dem Verstellteil (20; 120; 264; 320; 420) im Eingriff befindet, so dass, wenn die Antriebsmutter (14; 114; 270; 314; 414) das Verstellteil (20; 120; 264; 320; 420) um einen ersten Verstellweg bewegt, sich der Draht (280; 380; 480) und die Hülle (76; 382; 482) um einen zweiten Verstellweg relativ zueinander bewegen,
**dadurch gekennzeichnet,**
**dass** der Aktuator einen Verstellwegverstärker (30) oder einen Verstellwegverstärker mit einem Teleskopverstellsegment (130; 330; 430) oder einen Verstellwegverstärker mit einem Teleskopverstellsegment mit einer Riemenscheibe (350) oder einen Verstellwegverstärker mit zwei Riemenscheiben (450, 492) besitzt, wobei der Verstärker (30; 130; 330; 430) sich mit dem Verstellteil (20; 120; 264; 320; 420) so im Eingriff befindet, dass der zweite Verstellweg größer als der erste Verstellweg ist.

2. Aktuator nach Anspruch 1, wobei das Verstellteil eine erste Gewindespindel (20; 120; 320; 420) und der Verstellwegverstärker eine zweite Gewindespindel (30; 130; 330; 430) ist.

3. Aktuator nach Anspruch 1 oder Anspruch 2, wobei die Antriebsmutter (14; 114; 270; 314; 414) an dem Gehäuse (10; 110) drehbar aber nicht verschiebbar angebracht ist.

4. Aktuator nach Anspruch 3, wobei die Anbringung teleskopartig ist.

5. Aktuator nach einem der Ansprüche 1-4, wobei das Verstellteil (120; 320; 420) oder das Teleskopverstellsegment (130; 330; 430) in dem Teleskopverstellsegment bzw. in dem Verstellteil schraubbefestigt oder wellenbefestigt ist.

6. Aktuator nach einem der Ansprüche 1-5, wobei die Seilzugdrahtanbringung das Verstellteil (120; 320; 420) oder das Teleskopverstellsegment (130; 330; 430) ist und die Seilzughüllenanbringung das Teleskopverstellsegment bzw. Verstellteil ist.

7. Aktuator nach einem der Ansprüche 1-6, wobei der Seilzug ein Bowdenzug ist.

8. Aktuator nach einem der Ansprüche 1-7, wobei die Seilzugdrahtanbringung einen Schlitz (36; 136; 288, 290, 292) zum Einsetzen des Seilzugdrahtendes beinhaltet.

9. Aktuator nach einem der Ansprüche 1-8, wobei das Gehäuse (10; 110), das Verstellteil (20; 120; 264; 320; 420) und/oder das Verstellweg verstärkende Segment (30; 130; 330; 430) aus Polyurethan hergestellt sind.

10. Aktuator nach einem der Ansprüche 1-9, wobei das Verstellteil eine erste Gewindespindel (20; 120; 320; 420) ist und der Verstellwegverstärker eine zweite Gewindespindel (30; 130; 330; 430) ist, und wobei die Antriebsmutter (14; 114; 270; 314; 414) in dem Gehäuse (10; 110) in einer festen Position angebracht ist und sich die erste Gewindespindel (20; 120; 320; 420) bezüglich der Antriebsmutter (14; 114; 270; 314; 414) dreht und verschiebt, und wobei sich die zweite Gewindespindel (30; 130; 330; 430) bezüglich der Antriebsmutter (14; 114; 270; 314; 414) und der ersten Gewindespindel (20; 120; 320; 420) verschiebt.

11. Aktuator nach einem der Ansprüche 1-10, welcher weiterhin eine zweite Seilzugdrahtanbringung und eine zweite Seilzughüllenanbringung umfasst.

12. Aktuator nach einem der Ansprüche 1-11, wobei eine Umdrehung der Antriebsmutter (14; 114; 270; 314; 414) zu einem Verstellweg des Seilzugdrahts von ca. 10 mm bezüglich der Seilzughülle (76; 382; 482) führt.

13. Aktuator nach einem der Ansprüche 1-12, wobei das Verstellteil eine erste Gewindespindel (20; 120; 320; 420) ist und der Verstellwegverstärker eine zweite Gewindespindel (30; 130; 330; 430) ist, wobei die Ganghöhen der ersten und zweiten Gewindespindeln in einem Bereich von ca. 2-3 mm liegen.

14. Aktuator nach einem der Ansprüche 1-13, wobei sich das Verstellteil (20; 120; 320; 420) und der Verstellwegverstärker (30; 130; 330; 430) mit einer Welle (40; 140; 325; 425) teleskopartig ineinander schieben.

15. Aktuator nach Anspruch 14, wobei die Welle (40; 140; 325; 425) Rippen (42; 142) besitzt, um eine Drehung zu verhindern.

16. Aktuator nach Anspruch 14 oder Anspruch 15, wobei sich entweder die Seilzugdrahtanbringung oder die Seilzughüllenanbringung an der Welle (40; 140; 325; 425) befindet.

17. Aktuator nach Anspruch 1, wobei der Verstellwegverstärker eine Riemenscheibe (250) und einen Riemenscheibenträger (262) umfasst.

18. Aktuator nach Anspruch 1, wobei sich die Seilzugdrahtanbringung und die Seilzughüllenanbringung beide in dem Gehäuse (10; 110) befinden und so angeordnet sind, dass der Seilzugdraht (280; 380; 480) um eine Riemenscheibe (250; 350) oder zwei Riemenscheiben (450, 492) läuft.

19. Aktuator nach Anspruch 17, wobei das Gehäuse weiterhin mindestens einen Installationsschlitz (288, 292) beinhaltet.

20. Aktuator nach Anspruch 1, welcher weiterhin eine zweite Riemenscheibe (450) umfasst.

21. Aktuator nach einem der Ansprüche 1-20, wobei die Antriebsmutter (14; 114; 270; 314; 414) durch einen Hebel, ein Handrad (290) oder einen Motor angetrieben wird.

22. Aktuator nach Anspruch 1, wobei der Verstellwegverstärker eine erste Gewindespindel (20; 120; 320; 420) umfasst, welche sich bezüglich der Antriebsmutter (14; 114; 270; 314; 414) dreht und das Verstellteil eine zweite Gewindespindel (30; 130; 330; 430) ist, welche sich in oder um die erste Gewindespindel (20; 120; 320; 420) teleskopartig verschiebt.

23. Aktuator nach Anspruch 1, wobei der Verstellwegverstärker ein teleskopartiges Verstellsegment mit einem Riemenscheibenträger (262) und einer Riemenscheibe (250) umfasst.

24. Aktuator nach Anspruch 1, wobei das Verstellteil (420) einen Riemenscheibenträger (428) und eine Riemenscheibe (450) besitzt und der Verstellwegverstärker (430) ein teleskopartiges Verstellsegment mit einem Riemenscheibenträger (494) und einer zweiten Riemenscheibe (492) umfasst.

25. Aktuator nach Anspruch 1, wobei der Draht (480) drei Mal um die beiden Riemenscheiben (450, 492) verläuft.

## Revendications

1. Actionneur de déplacement comportant un carter (10 ; 110) et comportant au moins un élément mobile (20 ; 120 ; 264 ; 320 ; 420), l'actionneur comportant un support de fil de câble de traction pour un fil (280 ; 380 ; 480) sur le carter (10 ; 110) ou sur l'élément mobile (20 ; 120 ; 264 ; 320 ; 420) et l'actionneur comportant un support de gaine de câble de traction pour une gaine (76 ; 382 ; 482) sur le carter (10 ; 110) ou sur l'élément mobile (20 ; 120 ; 264 ; 320 ; 420), l'actionneur comportant également un écrou d'entraînement (14 ; 114 ; 270 ; 314 ; 414) en prise de manière fonctionnelle avec le carter (10 ; 110) et l'élément mobile (20 ; 120 ; 264 ; 320 ; 420) de sorte que, lorsque l'écrou d'entraînement (14 ; 114 ; 270 ; 314 ; 414) déplace l'élément mobile (20 ; 120 ; 264 ; 320 ; 420) d'une première distance, le fil (280 ; 380 ; 480) et la gaine (76 ; 382 ; 482) se déplacent d'une deuxième distance l'un par rapport à l'autre,
**caractérisé en ce que**,
l'actionneur comporte un dispositif de multiplication de course (30), ou un dispositif de multiplication de course ayant un segment mobile télescopique (130 ; 330 ; 430), ou un dispositif de multiplication de course ayant un segment mobile télescopique munie d'une poulie (350), ou un dispositif de multiplication de course ayant deux poulies (450, 492), le dispositif de multiplication (30 ; 130 ; 330 ; 430) étant en prise avec l'élément mobile (20 ; 120 ; 264 ; 320 ; 420) de sorte que la deuxième distance soit supérieure à la première distance.

2. Actionneur selon la revendication 1, dans lequel ledit élément mobile est une première vis-mère (20 ; 120 ; 320 ; 420), et ledit dispositif de multiplication de course est une deuxième vis-mère (30 ; 130 ; 330 ; 430).

3. Actionneur selon la revendication 1 ou la revendication 2, dans lequel ledit écrou d'entraînement (14 ; 114 ; 270 ; 314 ; 414) est monté dans ledit carter (10 ; 110) pour tourner mais pas pour se translater.

4. Actionneur selon la revendication 3, dans lequel ledit support est télescopique.

5. Actionneur selon l'une quelconque des revendications 1 à 4, dans lequel l'un parmi l'élément mobile (120 ; 320 ; 420) ou le segment mobile télescopique (130 ; 330 ; 430) est monté par vis ou monté par arbre dans l'autre parmi l'élément mobile ou le segment mobile télescopique.

6. Actionneur selon l'une quelconque des revendications 1 à 5, dans lequel ledit support de fil de câble de traction se trouve sur l'un parmi l'élément mobile (120 ; 320 ; 420) ou le segment mobile télescopique (130 ; 330 ; 430) et le support de gaine de câble de traction se trouve sur l'autre parmi l'élément mobile ou le segment mobile télescopique.

7. Actionneur selon l'une quelconque des revendications 1 à 6, dans lequel le câble de traction est un câble bowden.

8. Actionneur selon l'une quelconque des revendications 1 à 7, dans lequel ledit support de fil de câble de traction comprend une fente (36 ; 136 ; 288, 290, 292) pour l'installation de l'extrémité du fil de câble de traction.

9. Actionneur selon l'une quelconque des revendications 1 à 8, dans lequel ledit carter (10 ; 110), ledit élément mobile (20 ; 120 ; 264 ; 320 ; 420) et/ou ledit segment de multiplication de course (30 ; 130 ; 330 ; 430) sont réalisés en polyuréthane.

10. Actionneur selon l'une quelconque des revendications 1 à 9, dans lequel ledit élément mobile est une première vis-mère (20 ; 120 ; 320 ; 420) et ledit dispositif de multiplication de course est une deuxième vis-mère (30 ; 130 ; 330 ; 430), et dans lequel ledit écrou d'entraînement (14 ; 114 ; 270 ; 314 ; 414) est monté dans ledit carter (10 ; 110) à une position fixe et ladite première vis-mère (20 ; 120 ; 320 ; 420) tourne et se translate par rapport audit écrou d'entraînement (14 ; 114 ; 270 ; 314 ; 414) et ladite deuxième vis-mère (30 ; 130 ; 330 ; 430) se translate par rapport audit écrou d'entraînement (14 ; 114 ; 270 ; 314 ; 414) et à ladite première vis-mère (20 ; 120 ; 320 ; 420).

11. Actionneur selon l'une quelconque des revendications 1 à 10, comprenant en outre un deuxième support de fil de câble de traction et un deuxième support de gaine de câble de traction.

12. Actionneur selon l'une quelconque des revendications 1 à 11, dans lequel une rotation de l'écrou d'entraînement (14 ; 114 ; 270 ; 314 ; 414) produit un déplacement d'environ 10 mm du fil de câble de traction par rapport à la gaine de câble de traction (76 ; 382 ; 482).

13. Actionneur selon l'une quelconque des revendications 1 à 12, dans lequel ledit élément mobile est une première vis-mère (20 ; 120 ; 320 ; 420) et ledit dispositif de multiplication de course est une deuxième vis-mère (30 ; 130 ; 330 ; 430), les pas de vis des première et deuxième vis-mères étant dans une plage d'environ 2 à environ 3 mm.

14. Actionneur selon l'une quelconque des revendications 1 à 13, dans lequel l'élément mobile (20 ; 120 ; 320 ; 420) et le dispositif de multiplication de course (30 ; 130 ; 330 ; 430) pénètrent l'un dans l'autre au moyen d'un arbre (40 ; 140 ; 325 ; 425).

15. Actionneur selon la revendication 14, dans lequel l'arbre (40 ; 140 ; 325 ; 425) comporte des arêtes (42 ; 142) pour empêcher une rotation.

16. Actionneur selon la revendication 14 ou la revendication 15, dans lequel soit le support de fil de câble de traction, soit le support de gaine de câble de traction se trouve sur l'arbre (40 ; 140 ; 325 ; 425).

17. Actionneur selon la revendication 1, dans lequel ledit dispositif de multiplication de course est constitué d'une poulie (250) et d'un support de poulie (262).

18. Actionneur selon la revendication 1, dans lequel le support de fil de câble de traction et le support de gaine de câble de traction se trouvent tous deux dans le carter (10 ; 110) et sont positionnés de sorte que le fil de câble de traction (280 ; 380 ; 480) se déplace autour d'une poulie (250 ; 350) ou de deux poulies (450, 492).

19. Actionneur selon la revendication 17, dans lequel ledit carter comprend, en outre, au moins une fente d'installation (288, 292).

20. Actionneur selon la revendication 1, comprenant en outre une deuxième poulie (450).

21. Actionneur selon l'une quelconque des revendications 1 à 20, dans lequel ledit écrou d'entraînement (14 ; 114 ; 270 ; 314 ; 414) est entraîné par un levier ou un volant de manoeuvre (290) ou un moteur.

22. Actionneur selon la revendication 1, dans lequel ledit dispositif de multiplication de course comprend une première vis-mère (20 ; 120 ; 320 ; 420) tournant par rapport audit écrou d'entraînement (14 ; 114 ; 270 ; 314 ; 414) et ledit élément mobile est une deuxième vis-mère (30 ; 130 ; 330 ; 430) pénétrant dans ou autour de ladite première vis-mère (20 ; 120 ; 320 ; 420).

23. Actionneur selon la revendication 1, dans lequel ledit dispositif de multiplication de course est constitué d'un segment mobile télescopique ayant un support de poulie (262) et d'une poulie (250).

24. Actionneur selon la revendication 1, dans lequel ledit élément mobile (420) comporte un support de poulie (428) et une poulie (450) et ledit dispositif de multiplication de course (430) comprend un segment mobile télescopique ayant un support de poulie (494) et une deuxième poulie (492).

25. Actionneur selon la revendication 1, dans lequel ledit fil (480) effectue trois tours autour de deux poulies (450, 492).
